# EUROPEAN PATENT SPECIFICATION

(11) **EP 2 052 031 B1**
(45) Date of publication and mention of the grant of the patent: **05.01.2011**
(21) Application number: 07799309.5
(22) Date of filing: 05.07.2007
(51) Int. Cl.: C08L 71/00

(54) **POLY (ARYLENE ETHER) COMPOSITION, METHOD, AND ARTICLE**
POLY(ARYLENETHER)ZUSAMMENSETZUNG, VERFAHREN UND GEGENSTAND
COMPOSITION DE POLYARYLÈNE ÉTHER, PROCÉDÉ, ET ARTICLE

(30) Priority: 18.08.2006 US 465635; 18.08.2006 US 465640
(43) Date of publication of application: 29.04.2009
(73) Proprietor: SABIC Innovative Plastics IP B.V., 4612 PX Bergen op Zoom (NL)
(72) Inventor: BALFOUR, Kim, Delanson, NY 12053 (US); GUO, Hua, Selkirk, NY 12158 (US); MHETAR, Vijay, Slingerlands, NY 12159 (US)
(74) Representative: Bublak, Wolfgang
(86) International application number: PCT/US2007/072838
(87) International publication number: WO 2008/021629

(56) References cited:
- EP-A2- 0 367 188
- WO-A-00/37564

## Description

### BACKGROUND OF THE INVENTION

Compositions containing poly(arylene ether)s and styrenic block copolymers are known and valued for their improved properties relative to either resin type alone. For example, U.S. Patent No. 3,660,531 to Lauchlan describes blends of polyphenylene ethers with styrene-butadiene block copolymers and teaches that the blends exhibit improved melt processability and impact resistance without sacrificing the desirable heat distortion temperature and flexural modulus of unmodified polyphenylene ether. As another example, U.S. Patent No. 5,234,994 to Shiraki et al. describes blends of a polyphenylene ether, a block copolymer of a vinyl aromatic hydrocarbon and a conjugated diene, and polystyrene. The blends are described as offering improved transparency, impact resistance, surface hardness, heat resistance, and gloss. As yet another example, U.S. Patent No. 6,274,670 to Adedeji et al. describes a composition comprising a polyphenylene ether resin, a non-elastomeric styrenic resin, and an unsaturated elastomeric styrenic block copolymer. When the non-elastomeric styrenic resin is a styrene-butadiene block copolymer having at least 50 weight percent styrene, these compositions are semi-transparent and exhibit enhanced processability.

So, although some semi-transparent blends of poly(arylene ether) and styrenic resins are known, the uses of these resins are presently limited by their relatively low ductility. There is therefore a need in the packaging and healthcare industries, among others, for compositions that exhibit an improved balance of optical clarity and ductility.

### BRIEF DESCRIPTION OF THE INVENTION

One embodiment is thermoplastic composition exhibiting an improved balance of optical properties and ductility. The composition comprises a poly(arylene ether) and a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight less than or equal to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256; wherein the composition exhibits a percent transmittance of at least 45 percent, measured at 23°C and a thickness of 3.2 millimeters according to ASTM D 1003, a percent haze of less than or equal to 30 percent, measured at 23°C and a thickness of 3.2 millimeters according to ASTM D 1003, and a notched Izod impact strength of at least 50 joules per meter, measured at 23°C according to ASTM D 256.

Another embodiment is a composition consisting of: a poly(arylene ether); a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256; optionally, a homopolystyrene; optionally, at least one optically-enhancing additive selected from the group consisting of alpha-hydroxyketones, unsubstituted or substituted trihydrocarbyl phosphites, and carboxylic acid compounds of formula (I), (II), or (III) 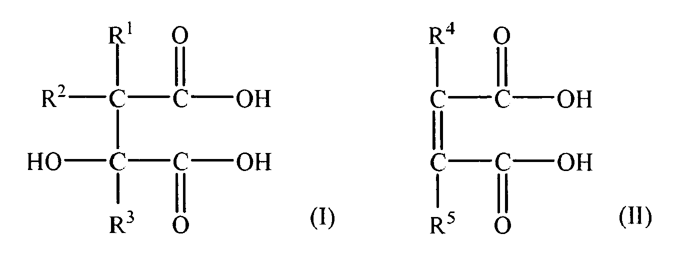 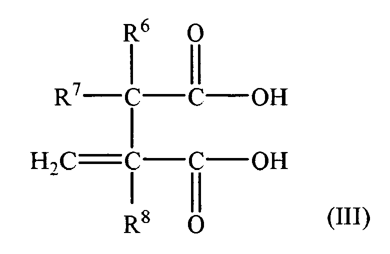 and their hydrates and anhydrides, wherein R¹, R², R³, R⁴, R⁵, R⁶, R⁷, and R⁸ are each independently selected from the group consisting of hydrogen and C₁-C₁₂ hydrocarbyl optionally substituted with one or more substituents selected from hydroxy, ketone, etheric oxygen, and carboxylic acid; and optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, carbon black, metal deactivators, antiblocking agents, and combinations thereof; wherein the composition exhibits a percent transmittance of at least 45 percent, measured at 23°C and a thickness of 3.2 millimeters according to ASTM D 1003, a percent haze of less than or equal to 30 percent, measured at 23°C and a thickness of 3.2 millimeters according to ASTM D 1003, and a notched Izod impact strength of at least 50 joules per meter, measured at 23°C according to ASTM D 256.

Another embodiment is a composition, comprising: a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; and an unhydrogenated radial block copolymer of styrene and butadiene; wherein the unhydrogenated radial block copolymer has 50 to about 75 weight percent of repeating units derived from styrene; wherein the unhydrogenated radial block copolymer has a number average molecular weight of about 50,000 to about 70,000 atomic mass units; and wherein a 70:30 weight/weight intimate blend of the unhydrogenated radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

Another embodiment is a composition, consisting of: a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; an unhydrogenated radial block copolymer of styrene and butadiene; wherein the unhydrogenated radial block copolymer has 50 to about 75 weight percent of repeating units derived from styrene; wherein the unhydrogenated radial block copolymer has a number average molecular weight of about 50,000 to about 70,000 atomic mass units; and wherein a 70:30 weight/weight intimate blend of the unhydrogenated radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; optionally, a homopolystyrene; optionally, at least one optically-enhancing additive selected from the group consisting of benzoin, tridecyl phosphite, and citric acid; and optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, carbon black, metal deactivators, antiblocking agents, and combinations thereof; wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

Another embodiment is a composition, comprising: about 80 to about 95 weight percent of a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; and about 5 to about 20 weight percent of an unhydrogenated radial block copolymer of styrene and butadiene; wherein the radial block copolymer has 50 to about 75 weight percent of repeating units derived from styrene; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; wherein all weight percents are based on the total weight of the composition; and wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

Another embodiment is a composition, consisting of: about 80 to about 95 weight percent of a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; about 5 to about 20 weight percent of an unhydrogenated radial block copolymer of styrene and butadiene; wherein the radial block copolymer has 50 to about 75 weight percent of repeating units derived from styrene; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; optionally, about 2 to about 15 weight percent of a homopolystyrene; optionally, about 0.2 to about 5 weight percent of at least one optically-enhancing additive selected from the group consisting of benzoin, tridecyl phosphite, and citric acid; and optionally, about 0.1 to about 10 weight percent of an additive selected from the group consisting of stabilizers, mold release agents, processing aids, flame retardants, drip retardants, nucleating agents, UV blockers, dyes, pigments, antioxidants, anti-static agents, blowing agents, mineral oil, carbon black, metal deactivators, antiblocking agents, and combinations thereof; wherein all weight percents are based on the total weight of the composition; and wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

Another embodiment is a method of preparing a thermoplastic composition, comprising: melt kneading a poly(arylene ether) and a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256; wherein the composition exhibits a percent transmittance of at least 45 percent, measured at 23°C and a thickness of 3.2 millimeters according to ASTM D 1003, a percent haze of less than or equal to 30 percent, measured at 23°C and a thickness of 3.2 millimeters according to ASTM D 1003, and a notched Izod impact strength of at least 50 joules per meter, measured at 23°C according to ASTM D 256.

Another embodiment is a method of preparing a thermoplastic composition, comprising: melt kneading a poly(arylene ether) to form a melted poly(arylene ether); and melt kneading the melted poly(arylene ether) with a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

Other embodiments, including articles comprising the compositions, are described in detail below.

### DETAILED DESCRIPTION OF THE INVENTION

One embodiment is a composition comprising a poly(arylene ether) and a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight less than or equal to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256; wherein the composition exhibits a percent transmittance of at least 45 percent, measured at 23°C and a thickness of 3.2 millimeters according to ASTM D 1003, a percent haze of less than or equal to 30, measured at 23°C and a thickness of 3.2 millimeters according to ASTM D 1003, and a notched Izod impact strength of at least 50 joules per meter, measured at 23°C according to ASTM D 256. The present inventors have discovered that this composition exhibits a dramatically improved balance of optical clarity and ductility relative to existing poly(arylene ether) compositions.

For the entire composition, the percent transmittance may be at least about 50 percent, or at least about 60 percent, or at least about 70 percent. Percent transmittance values at least as high as 75 percent have been observed. The percent haze value may be less than about 25 percent, or less than about 20 percent, or less than about 15 percent, or less than about 10 percent. Percent haze values at least as low as 4 percent have been observed. The notched Izod impact strength may be at least about 65 joules per meter, or at least about 75 joules per meter. Notched Izod impact strength values at least as high as 125 joules per meter have been observed.

The composition comprises a poly(arylene ether). In some embodiments, the poly(arylene ether) comprises repeating structural units having the formula 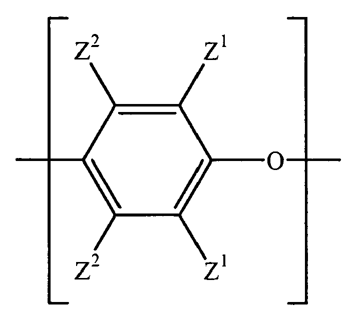 wherein for each structural unit, each Z¹ is independently halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue may be aliphatic or aromatic, straight-chain, cyclic, bicyclic, branched, saturated, or unsaturated. It may also contain combinations of aliphatic, aromatic, straight chain, cyclic, bicyclic, branched, saturated, and unsaturated hydrocarbon moieties. However, when the hydrocarbyl residue is described as "substituted", may contain heteroatoms over and above the carbon and hydrogen members of the substituent residue. Thus, when specifically described as substituted, the hydrocarbyl residue may also contain halogen atoms, nitro groups, cyano groups, carbonyl groups, carboxylic acid groups, ester groups, amino groups, amide groups, sulfonyl groups, sulfoxyl groups, sulfonamide groups, sulfamoyl groups, hydroxyl groups, alkoxyl groups, or the like, and it may contain heteroatoms within the backbone of the hydrocarbyl residue.

In some embodiments, the poly(arylene ether) comprises 2,6-dimethyl-1,4-phenylene ether units, 2,3,6-trimethyl-1,4-phenylene ether units, or a combination thereof.

The poly(arylene ether) may comprise molecules having aminoalkyl-containing end group(s), typically located in a position ortho to the hydroxy group. Also frequently present are tetramethyldiphenoquinone (TMDQ) end groups, typically obtained from reaction mixtures in which tetramethyldiphenoquinone by-product is present. The poly(arylene ether) may be in the form of a homopolymer, a copolymer, a graft copolymer, an ionomer, or a block copolymer, as well as combinations thereof.

In one embodiment, the composition is substantially free of acid- or anhydride-functionalized poly(arylene ether). As used herein, when the composition is described as being "substantially free" of a component, the term "substantially free" means that the composition comprises less than 0.5 weight percent of the specified component. More specifically, the composition may comprise less than 0.1 weight percent of the specified component, or none of the specified component may be intentionally added. In another embodiment, the composition comprises an acid- or anhydride-functionalized poly(arylene ether), such as maleic anhydride-functionalized poly(arylene ether), but the amount of the acid- or anhydride-functionalized poly(arylene ether) is small enough not to substantially interfere with the processability of the composition.

There is no particular limitation on the molecular weight or molecular weight distribution of the poly(arylene ether). In one embodiment, the poly(arylene ether) has an intrinsic viscosity of about 0.05 to about 1.0 deciliter per gram, measured at 25°C in chloroform. Within this above range of about 0.05 to about 1.0 deciliter per gram, the poly(arylene ether) may have an intrinsic viscosity of at least about 0.1 deciliter per gram, or at least about 0.2 deciliter per gram, or at least about 0.3 deciliter per gram. Also within this range, the poly(arylene ether) may have an intrinsic viscosity of up to about 0.8 deciliter per gram, or up to about 0.6 deciliter per gram.

In addition to the poly(arylene ether), the composition comprises a radial block copolymer of an alkenyl aromatic monomer and a conjugated diene, wherein the radial block copolymer has 50 to about 75 weight percent of repeating units derived from the alkenyl aromatic monomer, wherein the radial block copolymer has a number average molecular weight less than or equal to about 70,000 atomic mass units, and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256. As used herein, the term "radial block copolymer" refers to a branched polymer comprising poly(conjugated diene) blocks, poly(alkenyl aromatic) blocks, and the residue of a coupling agent that acts as a branching point or radius of the radial block copolymer. More particularly, in the radial block copolymer structure, multiple chains of the poly(conjugated diene) polymer, usually three or more, are each covalently bound at one end to the residue of a coupling agent and covalently bound at the other end to a block of the poly(alkenyl aromatic). In some embodiments, the radial block copolymer consists of the poly(conjugated diene) blocks, the poly(alkenyl aromatic) blocks, and the residue of the coupling agent. For example, the radial block copolymer may exclude residues derived from other polymerizable monomers.

The alkenyl aromatic monomer used to form the radial block copolymer may have the structure 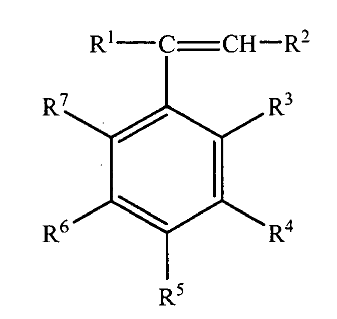 wherein R¹ and R² each independently represent a hydrogen atom, a C₁-C₈ alkyl group, or a C₂-C₈ alkenyl group; R³ and R⁷ each independently represent a hydrogen atom, a C₁-C₈ alkyl group, a chlorine atom, or a bromine atom; and R⁴-R⁶ each independently represent a hydrogen atom, a C₁-C₈ alkyl group, or a C₂-C₈ alkenyl group; or R³ and R⁴ are taken together with the central aromatic ring to form a naphthyl group, or R⁴ and R⁵ are taken together with the central aromatic ring to form a naphthyl group. Suitable alkenyl aromatic monomers include, for example, styrene, chlorostyrenes such as p-chlorostyrene, methylstyrenes such as alpha-methylstyrene and p-methylstyrene, and combinations thereof. In some embodiments, the alkenyl aromatic monomer is styrene.

The conjugated diene used to form the radial block copolymer may be, for example, 1,3-butadiene, 2-methyl-1,3-butadiene, 2-chloro-1,3-butadiene, 2,3-dimethyl-1,3-butadiene, 1,3-pentadiene, 1,3-hexadiene, and combinations thereof. In some embodiments, the conjugated diene is 1,3-butadiene. In some embodiments, the conjugated diene is 2-methyl-1,3-butadiene (isoprene).

The coupling agent may be any compound capable of joining at least three block copolymers. Examples of such compounds are multivinyl aromatic compounds; multiepoxide compounds (including epoxidized soybean oils); multiisocyanate compounds; multiimine compounds; multialdehyde compounds; multiketone compounds; multihalides; multianhydride compounds; and multiester compounds. The amount of coupling agent is typically about 0.1 to about 1 weight percent based on the weight of the total composition.

The radial block copolymer comprises 50 to about 75 weight percent of repeating units derived from the alkenyl aromatic monomer. Within this range, the alkenyl aromatic content of the radial block copolymer amount may be at least about 60 weight percent, or at least about 65 weight percent. Also within this range, the alkenyl aromatic content may be up to about 70 weight percent.

The radial block copolymer number has a number average molecular weight less than or equal to about 70,000 atomic mass units. In some embodiments, the number average molecular weight is about 50,000 to about 70,000 atomic mass units. Within this range, the number average molecular weight may be less than or equal to 65,000 atomic mass units, or less than or equal to 60,000 atomic mass units. The number average molecular weight of a radial block copolymer may be determined by gel permeation chromatography using polystyrene standards.

As noted above, a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256. The notched Izod value of the 70:30 blend may be at least about 300 joules per meter, or at least about 350 joules per meter, or at least about 400 joules per meter. The present inventors have observed that some commercially available radial block copolymers do not satisfy these criteria, and compositions prepared from them are inferior in ductility, optical properties, or both.

In some embodiments, the radial block copolymer is not hydrogenated ("unhydrogenated"). Specifically, residual aliphatic unsaturation in the poly(conjugated diene) block resulting from polymerization of the conjugated diene is not reduced by hydrogenation.

In some embodiments, the radial block copolymer is less than 5 percent crosslinked, based on the total number of aliphatic carbon-carbon double bonds in the radial block copolymer. Specifically, the radial block copolymer is not intentionally crosslinked by treatment with radiation or chemical agents capable of forming covalent crosslinks between the poly(conjugated diene) blocks of different radial block copolymer molecules.

Methods of preparing radial block copolymers are known in the art and include the methods described in, for example, U.S. Patent Nos. 3,281,383 to Zelinski et al., 3,639,517 to Kitchen et al., 4,180,530 to Bi et al., and 6,127,487 to Ahmed et al. Suitable radial block copolymers are also commercially available as, for example, K-Resin KK38 from Chevron Phillips Chemical Company.

The amounts of the poly(arylene ether) and the radial block copolymer in the composition may vary widely. For example, in some embodiments, the composition comprises about 10 to about 99 weight percent of the poly(arylene ether) and about 1 to about 90 weight percent of the radial block copolymer, based on the total weight of the composition. In some embodiments, the composition comprises about 50 to about 99 weight percent of the poly(arylene ether) and about 1 to about 50 weight percent of the radial block copolymer, based on the total weight of the composition.

In some embodiments, the composition comprises about 80 to about 99 weight percent of the poly(arylene ether) and about 1 to about 20 weight percent of the radial block copolymer, based on the total weight of the composition. Within this range, the poly(arylene ether) amount may be at least about 85 weight percent, or at least about 90 weight percent; it may also be up to about 95 weight percent. Also within this range, the radial block copolymer amount may be at least about 5 weight percent; it may also be up to about 15 weight percent, or up to about 10 weight percent.

The composition may, optionally, further comprise a homopolymer of an alkenyl aromatic monomer. Suitable homopolymers include atactic and syndiotactic homopolystyrenes. When present, the homopolymer of an alkenyl aromatic monomer may be used in an amount of about 2 to about 15 weight percent, based on the total weight of the composition.

Although the compositions comprising the poly(arylene ether) and the radial block copolymer inherently exhibit good optical clarity, the present inventors have discovered that the optical properties of the composition may be further enhanced by the addition of certain additives. Thus, the composition may, optionally, comprise at least one optically-enhancing additive selected from the group consisting of alpha-hydroxyketones, unsubstituted or substituted trihydrocarbyl phosphites, and carboxylic acid compounds of formula (I), (II), or (III) 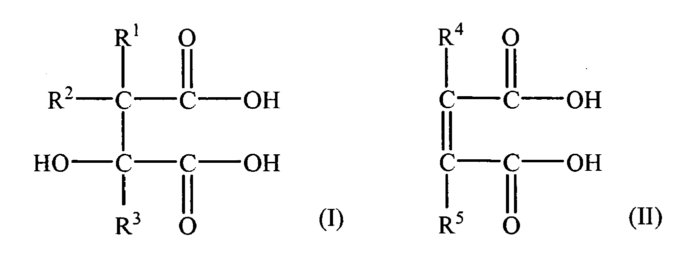 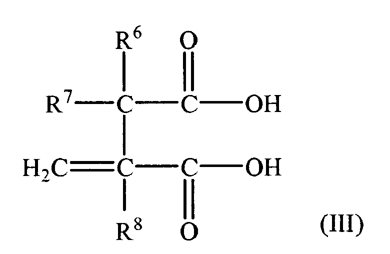 and their hydrates and anhydrides, wherein R¹, R², R³, R⁴, R⁵, R⁶, R⁷, and R⁸ are each independently selected from the group consisting of hydrogen and C₁-C₁₂ hydrocarbyl optionally substituted with one or more substituents selected from hydroxy (-OH), ketone (-C(=O)-), etheric oxygen (-O-), and carboxylic acid (-CO₂H). The optional divalent ketone and etheric oxygen substituents may be incorporated into the backbone or substituents of formulae (I), (II), or (III).

Alpha-hydroxyketones have the general formula 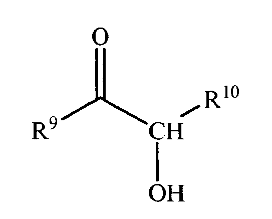 wherein R⁹ is C₁-C₁₂ hydrocarbyl, optionally substituted with hydroxy or ketone groups; and R¹⁰ is hydrogen or C₁-C₁₂ hydrocarbyl, optionally substituted with hydroxy or ketone groups. Suitable alpha-hydroxyketones include, for example, hydroxyacetone (1-hydroxy-2-propanone; Chemical Abstracts Service (CAS) Reg. No. 116-09-6), acetoin (3-hydroxy-2-butanone; CAS Reg. No. 513-86-0), 2-hydroxyacetophenone (CAS Reg. No. 528-24-1), benzoin (2-hydroxy-2-phenylacetophenone = CAS Reg. No. 119-53-9), 2-hydroxy-1-phenyl-2-p-tolyl-ethanone (CAS Reg. No. 2431-02-9), and the like, and combinations thereof.

Trihydrocarbyl phosphites may have the general structure P(OR¹¹)₃, wherein each occurrence of R¹¹ is independently C₁-C₁₈ hydrocarbyl. In some embodiments, each R¹¹ is independently C₆-C₁₈ alkyl. Suitable trihydrocarbyl phosphites include, for example, trioctyl phosphite, tridecyl phosphite, tridodecyl phosphite, phenyl didecyl phosphite, decyl diphenyl phosphite, triphenyl phosphite, tritolyl phosphites, and the like, and combinations thereof. Suitable trihydrocarbyl phosphites further include spiro diphosphites such as, for example, 3,9-bis[2,4-bis(1,1-dimethylethyl)phenoxy]-2,4,8,10-tetraoxa-3,9-diphosphaspiro[5.5]undecane (CAS Reg. No. 26741-53-7; commercially available from Ciba under the trade name IRGAFOS 126).

As mentioned above, the carboxylic acid compounds include those having formula (I), (II), or (III) 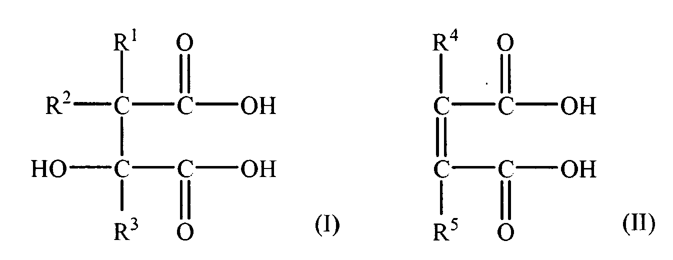 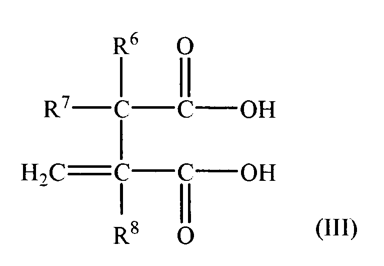 and their hydrates and anhydrides, wherein R¹, R², R³, R⁴, R⁵, R⁶, R⁷, and R⁸ are each independently selected from the group consisting of hydrogen and C₁-C₁₂ hydrocarbyl optionally substituted with one or more substituents selected from hydroxy, ketone, etheric oxygen, and carboxylic acid. Suitable carboxylic acid compounds include, for example, aconitic acid (CAS Reg. No. 499-12-7), agaricic acid (CAS Reg. No. 666-99-9), citric acid (CAS Reg. No. 77-92-9), citraconic acid (CAS Reg. No. 498-23-7), fumaric acid (CAS Reg. No. 110-17-8), itaconic anhydride (CAS Reg. No. 2170-03-8), malic acid (CAS Reg. No. 6915-15-7), maleic acid (CAS Reg. No. 110-16-7), and the like, and combinations thereof.

In some embodiments, the composition comprises at least one of benzoin, citric acid, and tridecyl phosphite. In some embodiments, the composition comprises benzoin, citric acid, and tridecyl phosphite.

In some embodiments, the composition comprising one or more of the optically-enhancing additives exhibits a percent transmittance of about 45 to about 75 percent, measured at 23°C and a thickness of 3.2 millimeters according to ASTM D 1003, and a percent haze of about 4 to about 27 percent, measured at 23°C and a thickness of 3.2 millimeters according to ASTM D 1003. Within the above range, the percent transmittance may be at least about 50 percent, or at least about 60 percent, or at least about 70 percent. Within the above range, the percent haze may be less than or equal to 20 percent, or less than or equal to 15 percent, or less than or equal to 10 percent.

The composition may, optionally, further comprise one or more additives. Such additives include, for example, stabilizers, mold release agents, processing aids, flame retardants, drip retardants, nucleating agents, UV blockers, dyes, pigments, antioxidants, anti-static agents, blowing agents, mineral oil, metal deactivators, antiblocking agents, and the like, and combinations thereof. Additives may be added in amounts that do not unacceptably detract from the desired physical properties of the composition. For example, the composition may comprise about 0.1 to about 10 weight percent additives, based on the total weight of the composition.

In some embodiments, the composition further comprises a filler. The filler is preferably one that does not detract from the desirable optical properties of the composition. Thus, in some embodiments, the composition comprises a filler comprising less than 5 weight percent of particles having any dimension greater than 200 nanometers. The filler may be substantially free of particles having any dimension greater than 200 nanometers. Such fillers may include, for example, nanotalcs, fumed silicas, and nanoclays.

In some embodiments, the composition excludes polymeric component other than those specified above. For example, the composition may exclude polyesters, polyamides, polycarbonates, block copolymers other than the radial block copolymer, epoxy-substituted polymers (including epoxy-substituted poly(arylene ether)s), and water-soluble polymers (such as those described in European Patent Application No. 1,512,725 A1 of Ito).

One embodiment is a composition, consisting of a poly(arylene ether); a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256; optionally, a homopolystyrene; optionally, at least one optically-enhancing additive selected from the group consisting of alpha-hydroxyketones, unsubstituted or substituted trihydrocarbyl phosphites, and carboxylic acid compounds of formula (I), (II), or 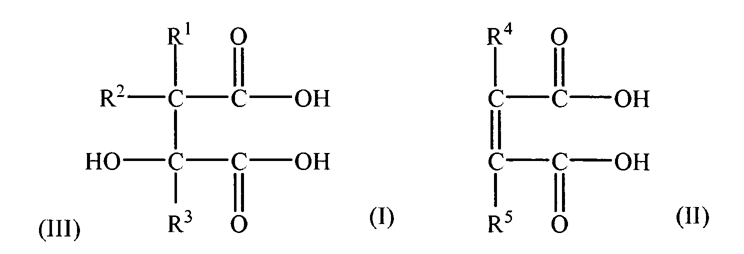 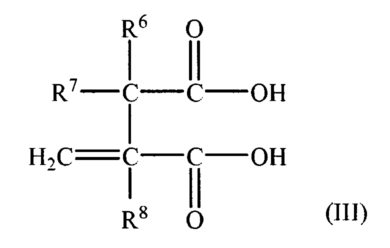 and their hydrates and anhydrides, wherein R¹, R², R³, R⁴, R⁵, R⁶, R⁷, and R⁸ are each independently selected from the group consisting of hydrogen and C₁-C₁₂ hydrocarbyl optionally substituted with one or more substituents selected from hydroxy, ketone, etheric oxygen, and carboxylic acid; and optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, carbon black, metal deactivators, antiblocking agents, and combinations thereof; wherein the composition exhibits a percent transmittance of at least 45 percent, measured at 23°C and a thickness of 3.2 millimeters according to ASTM D 1003, a percent haze of less than or equal to 30 percent, measured at 23°C and a thickness of 3.2 millimeters according to ASTM D 1003, and a notched Izod impact strength of at least 50 joules per meter, measured at 23°C according to ASTM D 256.

One embodiment is a composition, comprising a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; and an unhydrogenated radial block copolymer of styrene and butadiene; wherein the unhydrogenated radial block copolymer has 50 to about 75 weight percent of repeating units derived from styrene; wherein the unhydrogenated radial block copolymer has a number average molecular weight of about 50,000 to about 70,000 atomic mass units; and wherein a 70:30 weight/weight intimate blend of the unhydrogenated radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256. In some embodiments, the composition further comprises about 0.2 to about 5 weight percent of least one optically-enhancing additive selected from the group consisting of benzoin, tridecyl phosphite, and citric acid.

One embodiment is a composition, consisting of a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; an unhydrogenated radial block copolymer of styrene and butadiene; wherein the unhydrogenated radial block copolymer has 50 to about 75 weight percent of repeating units derived from styrene; wherein the unhydrogenated radial block copolymer has a number average molecular weight of about 50,000 to about 70,000 atomic mass units; and wherein a 70:30 weight/weight intimate blend of the unhydrogenated radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; optionally, a homopolystyrene; optionally, at least one optically-enhancing additive selected from the group consisting of benzoin, tridecyl phosphite, and citric acid; and optionally, an additive selected from the group consisting of stabilizers, mold release agents, processing aids, flame retardants, drip retardants, nucleating agents, UV blockers, dyes, pigments, antioxidants, anti-static agents, blowing agents, mineral oil, carbon black, metal deactivators, antiblocking agents, and combinations thereof; wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

One embodiment is a composition, comprising about 80 to about 95 weight percent of a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; and about 5 to about 20 weight percent of an unhydrogenated radial block copolymer of styrene and butadiene; wherein the unhydrogenated radial block copolymer has 50 to about 75 weight percent of repeating units derived from styrene; wherein the unhydrogenated radial block copolymer has a number average molecular weight of about 50,000 to about 70,000 atomic mass units; and wherein a 70:30 weight/weight intimate blend of the unhydrogenated radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; wherein all weight percents are based on the total weight of the composition; and wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256. In some embodiments, the composition further comprises about 0.2 to about 5 weight percent of least one optically-enhancing additive selected from the group consisting of benzoin, tridecyl phosphite, and citric acid.

One embodiment is a composition, consisting of about 80 to about 95 weight percent of a poly(arylene ether) having an intrinsic viscosity of about 0.3 to about 0.6 deciliter per gram, measured at 25°C in chloroform, and comprising 2,6-dimethyl-1,4-phenylene ether units, 2,3,6-trimethyl-1,4-phenylene ether units, or a combination thereof; about 5 to about 20 weight percent of an unhydrogenated radial block copolymer of styrene and butadiene; wherein the unhydrogenated radial block copolymer has 50 to about 75 weight percent of repeating units derived from styrene; wherein the unhydrogenated radial block copolymer has a number average molecular weight of about 50,000 to about 70,000 atomic mass units; and wherein a 70:30 weight/weight intimate blend of the unhydrogenated radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; optionally, about 2 to about 50 weight percent of a homopolystyrene; optionally, about 0.2 to about 5 weight percent of at least one optically-enhancing additive selected from the group consisting of benzoin, tridecyl phosphite, and citric acid; and optionally, about 0.1 to about 10 weight percent of an additive selected from the group consisting of stabilizers, mold release agents, processing aids, flame retardants, drip retardants, nucleating agents, UV blockers, dyes, pigments, antioxidants, anti-static agents, blowing agents, mineral oil, carbon black, metal deactivators, antiblocking agents, and combinations thereof; wherein all weight percents are based on the total weight of the composition; and wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

One embodiment is a method of preparing a thermoplastic composition, comprising melt kneading a poly(arylene ether) and a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256; wherein the composition exhibits a percent transmittance of at least 45 percent, measured at 23°C and a thickness of 3.2 millimeters according to ASTM D 1003, a percent haze of less than or equal to 30 percent, measured at 23°C and a thickness of 3.2 millimeters according to ASTM D 1003, and a notched Izod impact strength of at least 50 joules per meter, measured at 23°C according to ASTM D 256. In some embodiments, the 70:30 weight/weight intimate blend of the radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256.

Apparatus suitable for preparing an intimate blend via melt-kneading includes, for example, a two-roll mill, a Banbury mixer, and a single-screw or twin-screw extruder.

In some embodiments, melt-kneading comprises using a twin-screw extruder.

Another embodiment is a method of preparing a thermoplastic composition, comprising: melt kneading a poly(arylene ether) to form a melted poly(arylene ether); and melt kneading the melted poly(arylene ether) with a radial block copolymer of an alkenyl aromatic monomer and a conjugated diene; wherein the radial block copolymer has 50 to about 75 weight percent of repeating units derived from the alkenyl aromatic monomer; wherein the radial block copolymer has a number average molecular weight of about 50,000 to about 70,000 atomic mass units; and wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of about 200 to about 410 joules per meter measured at 25°C according to ASTM D 256; wherein the composition exhibits a percent transmittance of about 45 to about 75 percent, measured at 23°C and a thickness of 3.2 millimeters according to ASTM D 1003, a percent haze of about 4 to about 27 percent, measured at 23°C and a thickness of 3.2 millimeters according to ASTM D 1003, and a notched Izod impact strength of about 50 to about 180 joules per meter, measured at 23°C according to ASTM D 256.

Other embodiments include articles formed from any of the above-described compositions. The composition is useful for products including, for example, animal cages, food packaging, sheet, film, ink cartridges, trays, tubes, and pipes.

The invention is further illustrated by the following non-limiting examples.

### NMR CHARACTERIZATION OF RADIAL BLOCK COPOLYMERS

This example describes characterization of two radial block copolymers by proton nuclear magnetic resonance spectroscopy (¹H NMR) and carbon-13 nuclear magnetic resonance spectroscopy (¹³C NMR). The first radial block copolymer was obtained as K-Resin KK38 from Chevron Phillips Chemical Company and, according to its manufacturer, has a melt flow rate of 9.0 grams per 10 minutes measured at 200°C and 5 kilograms load. The second radial block copolymer was obtained as K-Resin KR05 from Chevron Phillips Chemical Company and, according to its manufacturer, has a melt flow rate of 7.5 grams per 10 minutes measured at 200°C and 5 kilograms load. A ¹H NMR spectrum was obtained for each block copolymer in deuterated chloroform. Integration of the ¹H NMR resonances for the poly(conjugated diene) blocks and the poly(alkenyl aromatic) blocks indicates that KK38 contains 68 weight percent polystyrene and KRO5 contains 73 weight percent polystyrene, based on the total weight of the respective block copolymers.

### EXAMPLES 1-4, COMPARATIVE EXAMPLES 1-6

These examples illustrate that compositions of the invention comprising particular radial block copolymers exhibit improved impact strength compared to compositions comprising other block copolymers. Components and amounts are presented in Table 1. All amounts are given in parts by weight. The poly(arylene ether) was a poly(2,6-dimethyl-1,4-phenylene ether) having an intrinsic viscosity of about 0.46 deciliter per gram, obtained from GE Plastics ("PPE" in Table 1). The antioxidant pentaerythritol tetrakis(3-dodecylthiopropionate) was obtained as SEENOX 412S from Shipro Kasei Kaisha ("Antioxidant" in Table 1). A radial block copolymer having a styrene content of 68 weight percent and a melt flow rate of 9.0 grams per 10 minutes measured at 200°C and 5 kilograms load was obtained as K-Resin KK38 from Chevron Phillips Chemical Company ("KK38" in Table 1). A styrene-butadiene block copolymer described by its manufacturer as "multiarmed" and having a styrene content of 75 weight percent and a melt flow rate of 11.4 grams per 10 minutes measured at 200°C and 5 kilograms load was obtained as KRATON® D1493 from Kraton Polymers ("D1493" in Table 1). A styrene-butadiene block copolymer described by its manufacturer as "multiarmed" and having a styrene content of 75 weight percent and a melt flow rate of 11 grams per 10 minutes measured at 200°C and 5 kilograms load was obtained as KRATON® MD6459 from Kraton Polymers ("MD6459" in Table 1).

For each composition, all components except the block copolymer were dry blended and added to the feed throat of a twin-screw extruder. The block copolymer was added via a side-stuffer in barrel 7 of a 10-barrel extruder. It has been found that downstream addition of the block copolymer, rather than addition at the feed throat, may improve the impact strength of the resulting composition. The barrel temperatures from the feed throat to the die are 250 and 290°C in the first two barrels, respectively, and 300°C in the remaining barrels and at the die. The extruder operated at about 350 rotations per minute, and the feed rate was about 16 kilograms/hour (about 35 pounds/hour). The extruder had a vacuum vent at barrel 10 with 20-25 inches of water vacuum being applied. The screw design had fairly intensive mixing in barrels 2 to 4 with relatively mild mixing in barrel 9 downstream of the side stuffer.

Property values for each composition are presented in Table 1. Notched Izod impact strength was measured according to ASTM D 256 Method A at 23°C using a 0.907 kilogram (2.00 pound) hammer, and specimens having a notch such that at least 1.02 centimeter (0.4 inch) of the original 1.27 centimeter (0.5 inch) depth remained under the notch; the specimens were conditioned for 24 hours at 23°C after notching. Dynatup energy to maximum load, energy to failure, total energy, and maximum load were measured according ASTM D 3763 at 23°C using an Instron Dynatup Model 8250. All Dynatup energy values are expressed in joules (J), and Dynatup maximum load values are expressed in Newtons (N). The standard deviation for each property value represents evaluation of three samples per test. In the Table 1 rows for "failure mode", "B" indicates brittle failure (the test sample shattered into at least two fragments), "D" indicates ductile failure (the test sample was cleanly punctured), and "DB" indicates ductile-brittle failure (the test sample was punctured with some cracking). The results show that inventive Examples 1-3 exhibit substantially improved impact strength compared to the corresponding comparative examples. Example 4 has no corresponding comparative example, but it, too, exhibits excellent impact strength.

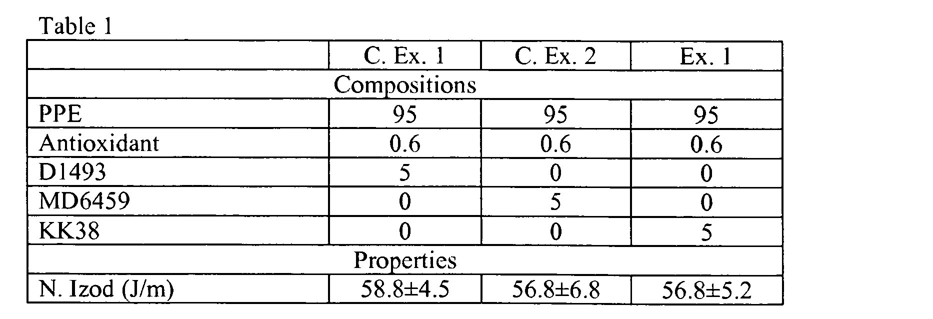

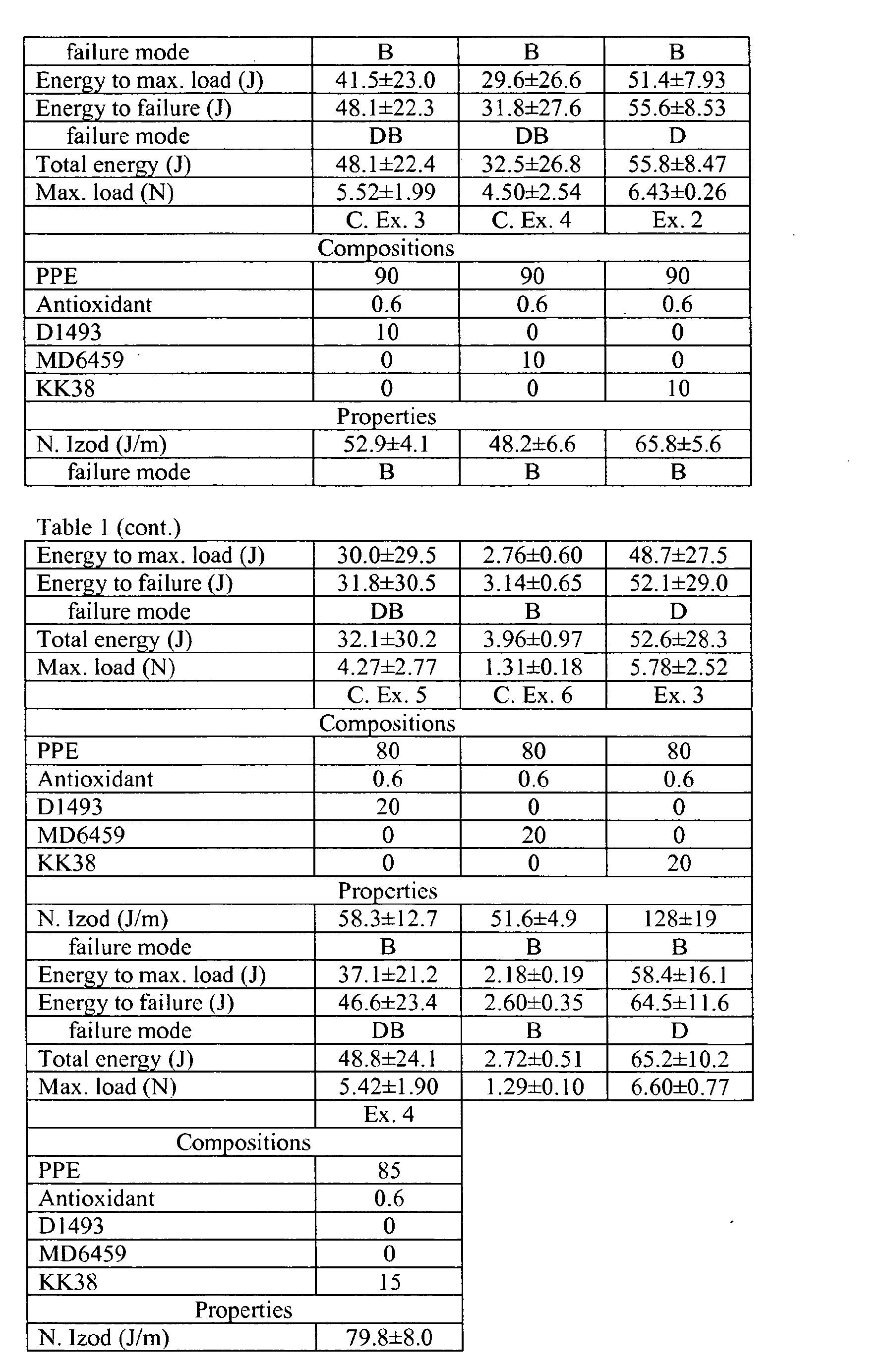

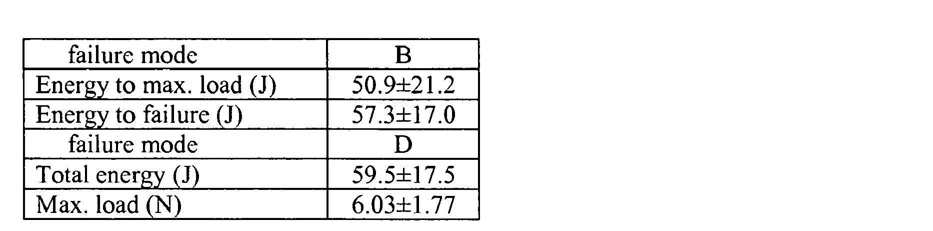

### EXAMPLES 5-12, COMPARATIVE EXAMPLES 7-10

These examples illustrate that compositions of the invention comprising combinations of an alpha-hydroxyketone, a trihydrocarbyl phosphite, and a carboxylic acid compound exhibit improved (reduced) percent haze compared to corresponding compositions without these haze-reducing additives. Components and amounts are presented in Table 2. All amounts are given in parts by weight. The poly(arylene ether), the KK38 radial block copolymer, and the SEENOX antioxidant were the same as those described for Examples 1-4. Benzoin was obtained as product no. 04-666 from Aceto Chemical. Tridecyl phosphite was obtained from Dover Chemical Company ("TDP" in Table 1). Anhydrous citric acid was obtained from Cargill ("CA" in Table 1).

Compositions were compounded as described for Examples 1-4.

Percent haze was measured according to ASTM D1003-00 at 23°C and a thickness of 3.200 millimeters. Percent haze values for each composition are presented in Table 2. The results show that the haze-reducing additives of the invention provide substantial reductions in percent haze for all inventive examples relative to the corresponding comparative examples without such additives. Percent haze is an objective property that correlates with the subject property of optical clarity.

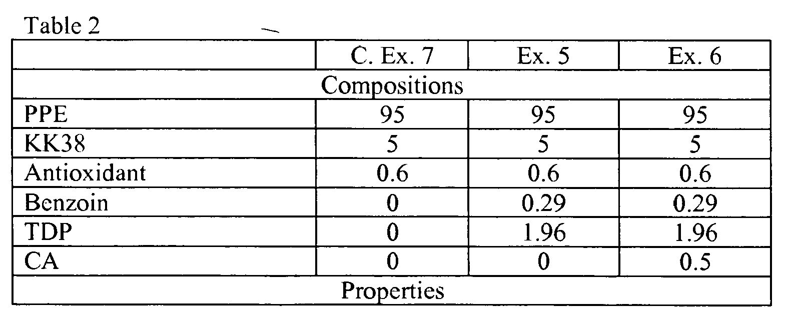

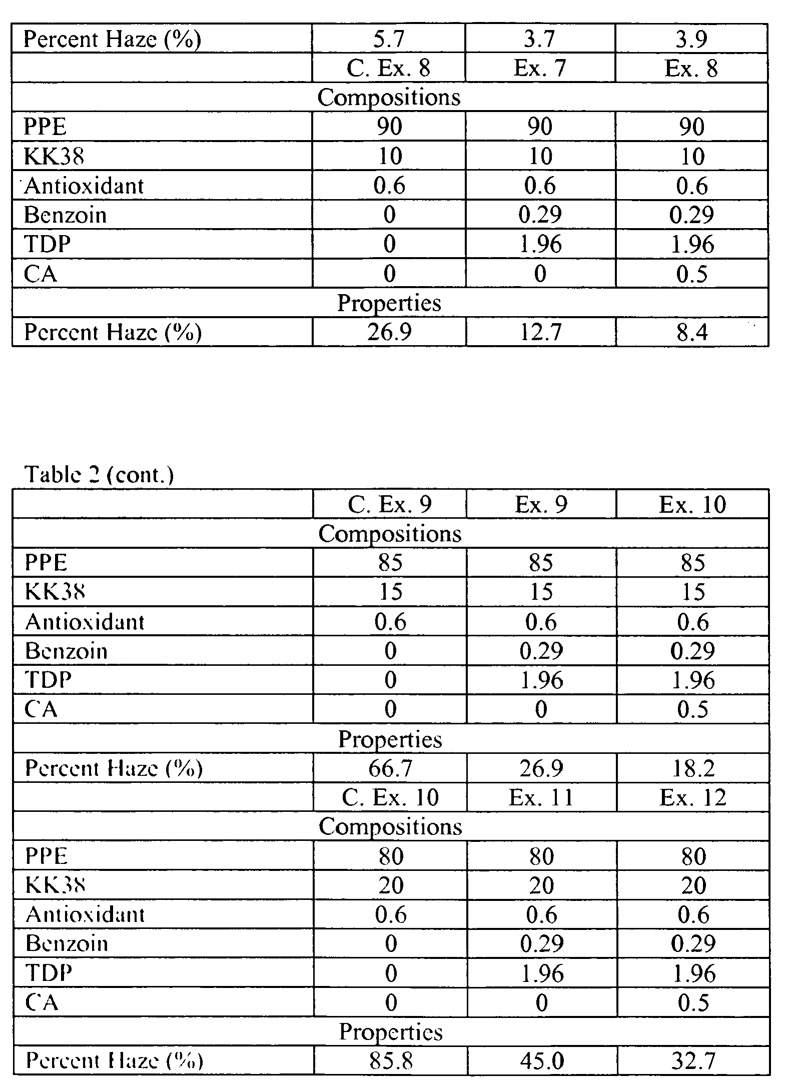

### EXAMPLES 13-22

These examples illustrate the effectiveness of alpha-hydroxyketones, trihydrocarbyl phosphites, and carboxylic acid compounds in reducing the haze and increasing the percent transmittance of compositions comprising poly(arylene ether) and radial block copolymer. Ten compositions were prepared, including three pairs of replicates (Examples 9 and 12, Examples 13 and 17, Examples 16 and 18). Component types and amounts (in parts by weight) are summarized in Table 3.

Percent haze was measured as described above. Percent transmittance was measured according to ASTM D 1003 at a thickness of 3.2 millimeters. The results, present in Table 3, show that the lowest (most desirable) haze values were associated with the addition of benzoin alone (Example 21) or benzoin and citric acid in combination (Example 15). The highest (most desirable) percent transmittance values were associated with the combination of benzoin and tridecyl phosphate (Example 19).

**Table 3**

| | Ex. 13 | Ex. 14 | Ex. 15 | Ex. 16 | Ex. 17 |
|---|---|---|---|---|---|
| Compositions | | | | | |
| PPE | 84 | 85 | 84 | 83 | 83 |
| KK38 | 15 | 15 | 15 | 15 | 15 |
| TDP | 1 | 0 | 0 | 1 | 1 |
| CA | 0 | 1 | 0 | 0 | 1 |
| Benzoin | 0 | 0 | 1 | 0 | 0 |

| Properties | | | | | |
|---|---|---|---|---|---|
| Percent Haze (%) | 49.4 | 28.1 | 9.5 | 57.6 | 43.8 |
| Percent Transmittance (%) | 58.7 | 47.0 | 61.6 | 56.8 | 48.8 |

| | Ex.18 | Ex.19 | Ex. 20 | Ex.21 | Ex. 22 |
|---|---|---|---|---|---|
| Compositions | | | | | |
| PPE | 83 | 83 | 82 | 82 | 82 |
| KK38 | 15 | 15 | 15 | 15 | 15 |
| TDP | 1 | 0 | 1 | 1 | 1 |
| CA | 0 | 1 | 1 | 1 | 1 |
| Benzoin | 1 | 1 | 1 | 0 | 1 |

| Properties | | | | | |
|---|---|---|---|---|---|
| Percent Haze (%) | 20.6 | 13.8 | 21.0 | 41.4 | 23.0 |
| Percent Transmittance (%) | 76.3 | 61.0 | 68.4 | 54.5 | 67.9 |

### EXAMPLES 23-30, COMPARATIVE EXAMPLES 11-14

These examples demonstrate additional inventive blends, including blends with relatively high proportions of the radial block copolymer component. Also included are comparative examples using a radial block copolymer that does not meet one or more criteria of the radial block copolymer used in the inventive composition.

The poly(arylene ether), KK38 radial block copolymer, benzoin, and tridecyl phosphite are the same as those used in Examples 1-4. A radial block copolymer having a styrene content of 75 weight percent and a melt flow rate of 7.5 grams per 10 minutes measured at 200°C and 5 kilograms load was obtained as K-Resin KR05 from Chevron Phillips Chemical Company ("KR05" in Table 4). A hindered phenol antioxidant was obtained as IRGANOX 1010 from Ciba Geigy ("Antioxidant" in Table 4). Component types and amounts (in parts by weight) are summarized in Table 4. Compositions were compounded as described for Examples 1-4. Notched Izod impact strength, expressed in joules per meter (J/m), was measured at 23°C according to ASTM D 256, Method A. The uncertainties in the notched Izod values reflect measurements on three samples per composition.

Comparison of results for Examples 23-25 (containing KK38 as radial block copolymer) with those for Comparative Examples 11-13 (containing KR05 as radial block copolymer) shows that the samples with KK38 exhibit substantially and unexpectedly greater impact strength.

The results for Examples 27-30 show that substantial improvements in impact strength are observed even with relatively low levels of the KK38 radial block copolymer (less than 20 weight percent, based on the total weight of the composition).

**Table 4**

| | Ex. 23 | Ex. 24 | Ex. 25 | C. Ex. 11 | C. Ex. 12 | C. Ex. 13 |
|---|---|---|---|---|---|---|
| Compositions | | | | | | |
| PPE | 30 | 40 | 50 | 30 | 40 | 50 |
| KK38 | 70 | 60 | 50 | 0 | 0 | 0 |
| KR05 | 0 | 0 | 0 | 70 | 60 | 50 |
| TDP | 0.5 | 0.5 | 0.5 | 0.5 | 0.5 | 0.5 |
| Benzoin | 0 | 0 | 0 | 0 | 0 | 0 |
| Antioxidant | 0 | 0 | 0 | 0 | 0 | 0 |
| Properties | | | | | | |
| N. Izod (J/m) | 413 ±24.5 | 79.9 ±5.6 | 87.9 ±17.5 | 50.0 ±3.4 | 44.4 ±2.1 | 54.2 ±1.5 |

| | Ex. 26 | C. Ex. 14 | Ex. 27 | Ex. 28 | Ex. 29 | Ex. 30 |
|---|---|---|---|---|---|---|
| Compositions | | | | | | |
| PPE | 50 | 80 | 80 | 80 | 80 | 80 |
| KK38 | 50 | 0 | 5 | 10 | 15 | 20 |
| KR05 | 0 | 20 | 15 | 10 | 5 | 0 |
| TDP | 0.5 | 0.5 | 0.5 | 0.5 | 0.5 | 0.5 |
| Benzoin | 0.5 | 0.5 | 0.5 | 0.5 | 0.5 | 0.5 |
| Antioxidant | 1 | 1 | 1 | 1 | 1 | 1 |

| Properties | | | | | | |
|---|---|---|---|---|---|---|
| N. Izod (J/m) | 59.4 ±2.4 | 50.1 ±3.5 | 54.5 ±4.3 | 54.2 ±9.1 | 61.9 ±8.2 | 71.1 ±6.6 |

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

All ranges disclosed herein are inclusive of the endpoints, and the endpoints are independently combinable with each other.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A composition, comprising:
a poly(arylene ether); and
a radial block copolymer of an alkenyl aromatic monomer and a conjugated diene;
wherein the radial block copolymer has 50 to 75 weight percent of repeating units derived from the alkenyl aromatic monomer;
wherein the radial block copolymer has a number average molecular weight less than or equal to 70,000 atomic mass units; and
wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256;
wherein the composition exhibits
a percent transmittance of at least 45 percent, measured at 23°C and a thickness of 3.2 millimeters according to ASTM D 1003,
a percent haze of less than or equal to 30 percent, measured at 23°C and a thickness of 3.2 millimeters according to ASTM D 1003, and
a notched Izod impact strength of at least 50 joules per meter, measured at 23°C according to ASTM D 256.

2. The composition of claim 1, exhibiting
a percent transmittance of 45 to 80 percent, measured at 23°C and a thickness of 3.2 millimeters according to ASTM D 1003,
a percent haze of 4 to 27 percent, measured at 23°C and a thickness of 3.2 millimeters according to ASTM D 1003, and
a notched Izod impact strength of 50 to 180 joules per meter, measured at 23°C according to ASTM D 256.

3. The composition of claim 1 or 2, wherein the radial block copolymer is an unhydrogenated radial block copolymer.

4. The composition of any of claims 1-3, wherein the radial block copolymer is less than 5 percent crosslinked.

5. The composition of any of claims 1-4, comprising 80 to 99 weight percent of the poly(arylene ether) and 1 to 20 weight percent of the radial block copolymer, wherein all weight percents are based on the total weight of the composition.

6. The composition of any of claims 1-5, further comprising at least one optically-enhancing additive selected from the group consisting of alpha-hydroxyketones, unsubstituted or substituted trihydrocarbyl phosphites, and carboxylic acid compounds of formula (I), (II), or (III) 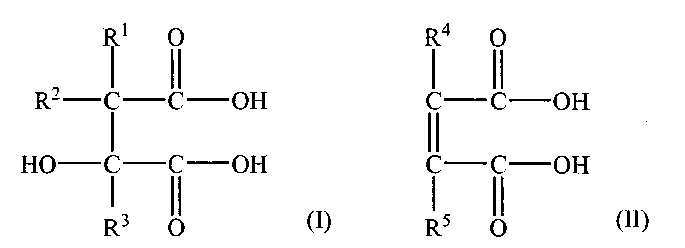 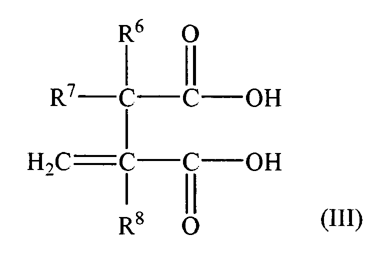 and their hydrates and anhydrides, wherein R¹, R², R³, R⁴, R⁵, R⁶, R⁷, and R⁸ are each independently selected from the group consisting of hydrogen and C₁-C₁₂ hydrocarbyl optionally substituted with one or more substituents selected from hydroxy, ketone, etheric oxygen, and carboxylic acid.

7. The composition of any of claims 1-6, further comprising at least one optically-enhancing additive selected from the group consisting of benzoin, tridecyl phosphite, and citric acid.

8. The composition of claim 1,
wherein the poly(arylene ether) is present in an amount of 80 to 99 weight percent;
wherein the poly(arylene ether) has an intrinsic viscosity of 0.3 to 0.6 deciliter per gram, measured at 25°C in chloroform, and comprises 2,6-dimethyl-1,4-phenylene ether units, 2,3,6-trimethyl-1,4-phenylene ether units, or a combination thereof;
wherein the radial block copolymer is present in an amount of 1 to 20 weight percent;
wherein the radial block copolymer is an unhydrogenated radial block copolymer of styrene and butadiene;
wherein the unhydrogenated radial block copolymer has 50 to 75 weight percent of repeating units derived from styrene;
wherein the unhydrogenated radial block copolymer has a number average molecular weight of 50,000 to 70,000 atomic mass units;
wherein a 70:30 weight/weight intimate blend of the unhydrogenated radial block copolymer and a poly(2,6-dimethyl-1,4-phenylene ether) with an intrinsic viscosity of 0.46 deciliters per gram has a notched Izod impact strength of 200 to 410 joules per meter measured at 25°C according to ASTM D 256;
wherein all weight percents are based on the total weight of the composition: and
wherein the composition exhibits
a percent transmittance of 45 to 75 percent, measured at 23°C and a thickness of 3.2 millimeters according to ASTM D 1003,
a percent haze of 4 to 27 percent, measured at 23°C and a thickness of 3.2 millimeters according to ASTM D 1003, and
a notched Izod impact strength of 50 to 180 joules per meter, measured at 23°C according to ASTM D 256.

9. A method of preparing a thermoplastic composition, comprising:
melt kneading
a poly(arylene ether); and
a radial block copolymer of an alkenyl aromatic monomer and a conjugated diene;
wherein the radial block copolymer has 50 to 75 weight percent of repeating units derived from the alkenyl aromatic monomer;
wherein the radial block copolymer has a number average molecular weight of 50,000 to 70,000 atomic mass units; and
wherein a 70:30 weight/weight intimate blend of the radial block copolymer and a poly(2,6-dimethyl-1,4-phenylene ether) with an intrinsic viscosity of 0.46 deciliters per gram has a notched Izod impact strength of least 200 joules per meter measured at 25°C according to ASTM D 256;
wherein the composition exhibits
a percent transmittance of at least 45 percent, measured at 23°C and a thickness of 3.2 millimeters according to ASTM D 1003,
a percent haze of less than or equal to 30, measured at 23°C and a thickness of 3.2 millimeters according to ASTM D 1003, and
a notched Izod impact strength of at least 50 joules per meter, measured at 23°C according to ASTM D 256.

10. An article comprising the composition of any of claims 1-8.

## Patentansprüche

1. Zusammensetzung, umfassend:
einen Poly(arylenether); und
ein Radialblockcopolymer von einem alkenylaromatischen Monomer und einem konjugierten Dien;
wobei das Radialblockcopolymer 50 bis 75 Gewichtsprozent von dem alkenylaromatischen Monomer abgeleitete Wiederholungseinheiten aufweist;
wobei das Radialblockcopolymer ein Zahlenmittel des Molekulargewichts von weniger als oder gleich 70.000 Atommasseneinheiten aufweist; und
wobei eine innige Mischung von 70:30 Gewicht/Gewicht des Radialblockcopolymers und eines Poly(2,6-Dimethyl-1,4-phenylenethers) mit einer Grenzviskosität von 0,46 Deziliter pro Gramm eine bei 25°C gemäß ASTM D 256 gemessene Izod-Kerbschlagzähigkeit von mindestens 200 Joule pro Meter aufweist;
wobei die Zusammensetzung aufweist:
eine bei 23°C und einer Dicke von 3,2 Millimeter gemäß ASTM D 1003 gemessene prozentuale Durchlässigkeit von mindestens 45 Prozent,
eine bei 23°C und einer Dicke von 3,2 Millimeter gemäß ASTM D 1003 gemessene prozentuale Trübung von weniger als oder gleich 30 Prozent und
eine bei 23°C gemäß ASTM D 256 gemessene Izod-Kerbschlagzähigkeit von mindestens 50 Joule pro Meter.

2. Zusammensetzung nach Anspruch 1, aufweisend:
eine bei 23°C und einer Dicke von 3,2 Millimeter gemäß ASTM D 1003 gemessene prozentuale Durchlässigkeit von 45 bis 80 Prozent,
eine bei 23°C und einer Dicke von 3,2 Millimeter gemäß ASTM D 1003 gemessene prozentuale Trübung von 4 bis 27 Prozent und
eine bei 23°C gemäß ASTM D 256 gemessene Izod-Kerbschlagzähigkeit von 50 bis 180 Joule pro Meter.

3. Zusammensetzung nach Anspruch 1 oder 2, wobei das Radialblockcopolymer ein unhydriertes Radialblockcopolymer ist.

4. Zusammensetzung nach einem der Ansprüche 1-3, wobei das Radialblockcopolymer weniger als 5 Prozent vernetzt ist.

5. Zusammensetzung nach einem der Ansprüche 1-4, umfassend 80 bis 99 Gewichtsprozent des Poly(arylenethers) und 1 bis 20 Gewichtsprozent des Radialblockcopolymers, wobei sämtliche Gewichtsprozentanteile auf dem Gesamtgewicht der Zusammensetzung basieren.

6. Zusammensetzung nach einem der Ansprüche 1-5, des Weiteren umfassend mindestens einen das Aussehen verbessernden Zusatz, ausgewählt aus der Gruppe, bestehend aus alpha-Hydroxyketonen, unsubstituierten oder substituierten Trihydrocarbylphosphiten und Carbonsäureverbindungen der Formel (I), (II) oder (III) 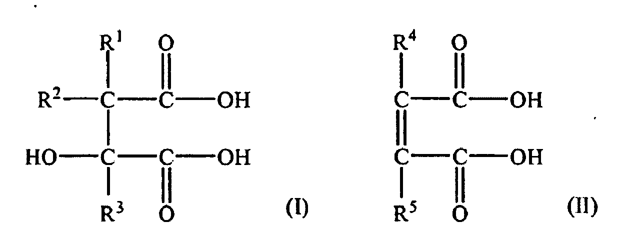 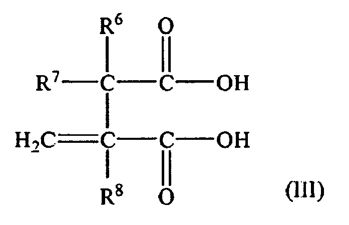 und deren Hydraten und Anhydriden, wobei R¹, R², R³, R⁴, R⁵, R⁶, R⁷ und R⁸ jeweils unabhängig ausgewählt sind aus der Gruppe, bestehend aus Wasserstoff und C₁-C₁₂-Hydrocarbyl, wahlweise substituiert mit einem oder mehreren Substituenten, ausgewählt aus Hydroxy, Keton, etherischem Sauerstoff und Carbonsäure.

7. Zusammensetzung nach einem der Ansprüche 1-6, des Weiteren umfassend mindestens einen das Aussehen verbessernden Zusatz, ausgewählt aus der Gruppe, bestehend aus Benzoin, Tridecylphosphit und Zitronensäure.

8. Zusammensetzung nach Anspruch 1,
wobei der Poly(arylenether) in einer Menge von 80 bis 99 Gewichtsprozent vorliegt;
wobei der Poly(arylenether) eine bei 25°C in Chloroform gemessene Grenzviskosität von 0,3 bis 0,6 Deziliter pro Gramm aufweist und 2,6-Dimethyl-1,4-Phenylenethereinheiten, 2,3,6-Trimethyl-1,4-phenylenether-einheiten oder eine Kombination davon umfasst;
wobei das Radialblockcopolymer in einer Menge von 1 bis 20 Gewichtsprozent vorliegt;
wobei das Radialblockcopolymer ein unhydriertes Radialblockcopolymer von Styrol und Butadien ist;
wobei das unhydrierte Radialblockcopolymer 50 bis 75 Gewichtsprozent von Styrol abgeleitete Wiederholungseinheiten aufweist;
wobei das unhydrierte Radialblockcopolymer ein Zahlenmittel des Molekulargewichts von 50.000 bis 70.000 Atommasseneinheiten aufweist;
wobei eine innige Mischung von 70:30 Gewicht/Gewicht des unhydrierten Radialblockcopolymers und eines Poly(2,6-Dimethyl-1,4-phenylenethers) mit einer Grenzviskosität von 0,46 Deziliter pro Gramm eine bei 25°C gemäß ASTM D 256 gemessene Izod-Kerbschlagzähigkeit von 200 bis 410 Joule pro Meter aufweist;
wobei sämtliche Gewichtsprozentanteile auf dem Gesamtgewicht der Zusammensetzung basieren; und
wobei die Zusammensetzung aufweist:
eine bei 23°C und einer Dicke von 3,2 Millimeter gemäß ASTM D 1003 gemessene prozentuale Durchlässigkeit von mindestens 45 bis 75 Prozent, eine bei 23°C und einer Dicke von 3,2 Millimeter gemäß ASTM D 1003 gemessene prozentuale Trübung von 4 bis 27 Prozent und
eine bei 23°C gemäß ASTM D 256 gemessene Izod-Kerbschlagzähigkeit von 50 bis 180 Joule pro Meter.

9. Verfahren zur Herstellung einer thermoplastischen Zusammensetzung, umfassend:
Schmelzkneten
eines Poly(arylenethers); und
eines Radialblockcopolymers von einem alkenylaromatischen Monomer und einem konjugierten Dien;
wobei das Radialblockcopolymer 50 bis 75 Gewichtsprozent von dem alkenylaromatischen Monomer abgeleitete Wiederholungseinheiten aufweist;
wobei das Radialblockcopolymer ein Zahlenmittel des Molekulargewichts von 50.000 bis 70.000 Atommasseneinheiten aufweist; und
wobei eine innige Mischung von 70:30 Gewicht/Gewicht des Radialblockcopolymers und eines Poly(2,6-Dimethyl-1,4-phenylenethers) mit einer Grenzviskosität von 0,46 Deziliter pro Gramm eine bei 25°C gemäß ASTM D 256 gemessene Izod-Kerbschlagzähigkeit von mindestens 200 Joule pro Meter aufweist;
wobei die Zusammensetzung aufweist:
eine bei 23°C und einer Dicke von 3,2 Millimeter gemäß ASTM D 1003 gemessene prozentuale Durchlässigkeit von mindestens 45 Prozent,
eine bei 23°C und einer Dicke von 3,2 Millimeter gemäß ASTM D 1003 gemessene prozentuale Trübung von weniger als oder gleich 30 Prozent und
eine bei 23°C gemäß ASTM D 256 gemessene Izod-Kerbschlagzähigkeit von mindestens 50 Joule pro Meter.

10. Gegenstand, umfassend die Zusammensetzung nach einem der Ansprüche 1-8.

## Revendications

1. Composition comprenant :
un poly(arylène éther) ; et
un polymère à blocs radiaux d'un monomère alcényl-aromatique et d'un diène conjugué ;
dans laquelle le copolymère à blocs radiaux comporte 50 à 75 pourcents en poids de motifs répétitifs qui dérivent du monomère alcénylaromatique ;
dans laquelle le copolymère à blocs radiaux a une masse moléculaire moyenne en nombre inférieure ou égale à 70 000 unités de masse atomique ; et
dans laquelle un mélange intime à 70:30 poids/poids du copolymère à blocs radiaux et d'un poly(2,6-diméthyl-1,4-phénylène éther), ayant une viscosité intrinsèque de 0,46 décilitres par gramme, présente une résistance au choc Izod sur barreau entaillé d'au moins 200 joules par mètre, mesurée à 25°C selon ASTM D 256 ;
la composition présentant :
un facteur de transmission en pourcentage d'au moins 45 pourcents, mesuré à 23°C pour une épaisseur de 3,2 millimètres selon ASTM D 1003,
un voile en pourcentage inférieur ou égal à 30 pourcents, mesuré à 23°C pour une épaisseur de 3,2 millimètres selon ASTM D 1003, et
une résistance au choc Izod sur barreau entaillé d'au moins 50 joules par mètre, mesurée à 23°C selon ASTM D 256.

2. Composition selon la revendication 1, présentant :
un facteur de transmission en pourcentage de 45 à 80 pourcents, mesuré à 23°C pour une épaisseur de 3,2 millimètres selon ASTM D 1003,
un voile en pourcentage de 4 à 27 pourcents, mesuré à 23°C pour une épaisseur de 3,2 millimètres selon ASTM D 1003, et
une résistance au choc Izod sur barreau entaillé de 50 à 180 joules par mètre, mesurée à 23°C selon ASTM D 256.

3. Composition selon la revendication 1 ou 2, dans laquelle le copolymère à blocs radiaux est un copolymère à blocs radiaux non hydrogénés.

4. Composition selon l'une quelconque des revendications 1 à 3, dans laquelle le copolymère à blocs radiaux présente un taux de réticulation inférieur à 5 pourcents.

5. Composition selon l'une quelconque des revendications 1 à 4, comprenant 80 à 99 pourcents en poids du poly(arylène éther) et 1 à 20 pourcents en poids du copolymère à blocs radiaux, tous les pourcentages en poids étant rapportés au poids total de la composition.

6. Composition selon l'une quelconque des revendications 1 à 5, qui comprend en outre au moins un additif améliorant les propriétés optiques, choisi dans le groupe consistant en les alpha-hydroxycétones, les phosphites de trihydrocarbyle non substitué ou substitué et les composés acides carboxyliques de formules (I), (II) ou (III) 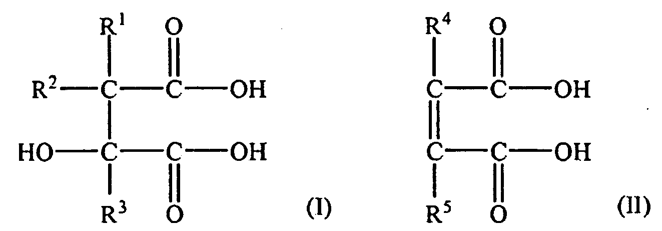 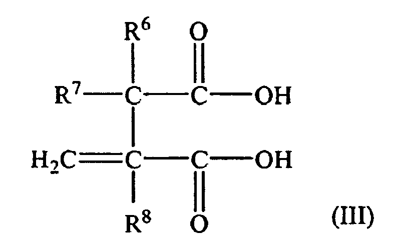 et leurs hydrates et anhydrides, où R¹, R², R³, R⁴, R⁵, R⁶, R⁷ et R⁸ sont chacun indépendamment des autres choisis dans le groupe consistant en l'atome d'hydrogène et les groupes hydrocarbyle en C₁-C₁₂, substitués en option par un ou plusieurs substituants choisis parmi les groupes hydroxy, cétone, oxygène d'éther et acide carboxylique.

7. Composition selon l'une quelconque des revendications 1 à 6, qui comprend en outre au moins un additif améliorant les propriétés optiques, choisi dans le groupe consistant en la benzoïne, le phosphite de tridécyle et l'acide citrique.

8. Composition selon la revendication 1, dans laquelle le poly(arylène éther) est présent en une quantité de 80 à 99 pourcents en poids ;
dans laquelle le poly(arylène éther) a une viscosité intrinsèque de 0,3 à 0,6 décilitre par gramme, mesurée à 25°C dans le chloroforme, et comprend des motifs 2,6-diméthyl-1,4-phénylène éther, des motifs 2,3,6-triméthyl-1,4-phénylène éther ou une combinaison de ceux-ci ;
dans laquelle le copolymère à blocs radiaux est présent en une quantité de 1 à 20 pourcents en poids ;
dans laquelle le copolymère à blocs radiaux est un copolymère à blocs radiaux non hydrogénés du styrène et du butadiène ;
dans laquelle le copolymère à blocs radiaux non hydrogénés possède 50 à 75 pourcents en poids de motifs répétitifs dérivés du styrène ;
dans laquelle le copolymère à blocs radiaux non hydrogénés a une masse moléculaire moyenne en nombre de 50 000 à 70 000 unités de masse atomique ;
dans laquelle un mélange intime à 70:30 poids/poids du copolymère à blocs radiaux non hydrogénés et d'un poly(2,6-diméthyl-1,4-phénylène éther), ayant une viscosité intrinsèque de 0,46 décilitre par gramme, présente une résistance au choc Izod sur barreau entaillé de 200 à 410 joules par mètre, mesurée à 25°C selon ASTM D 256 ;
dans laquelle tous les pourcentages en poids sont rapportés au poids total de la composition ; et
la composition présentant :
un facteur de transmission en pourcentage de 45 à 75 pourcents, mesuré à 23°C pour une épaisseur de 3,2 millimètres selon ASTM D 1003,
un voile en pourcentage de 4 à 27 pourcents, mesuré à 23°C pour une épaisseur de 3,2 millimètres selon ASTM D 1003, et
une résistance au choc Izod sur barreau entaillé de 50 à 180 joules par mètre, mesurée à 23°C selon ASTM D 256.

9. Procédé de préparation d'une composition thermoplastique, comprenant le malaxage à l'état fondu
d'un poly(arylène éther) ; et
d'un copolymère à blocs radiaux d'un monomère alcénylaromatique et d'un diène conjugué ;
dans laquelle le copolymère à blocs radiaux comporte 50 à 75 pourcents en poids de motifs répétitifs qui dérivent du monomère alcénylaromatique ;
dans laquelle le copolymère à blocs radiaux a une masse moléculaire moyenne en nombre inférieure ou égale à 70 000 unités de masse atomique ; et
dans laquelle un mélange intime à 70:30 poids/poids du copolymère à blocs radiaux et d'un poly(2,6-diméthyl-1,4-phénylène éther), ayant une viscosité intrinsèque de 0,46 décilitres par gramme, présente une résistance au choc Izod sur barreau entaillé d'au moins 200 joules par mètre, mesurée à 25°C selon ASTM D 256 ;
la composition présentant :
un facteur de transmission en pourcentage d'au moins 45 pourcents, mesuré à 23°C pour une épaisseur de 3,2 millimètres selon ASTM D 1003,
un voile en pourcentage inférieur ou égal à 30 pourcents, mesuré à 23°C pour une épaisseur de 3,2 millimètres selon ASTM D 1003, et
une résistance au choc Izod sur barreau entaillé d'au moins 50 joules par mètre, mesurée à 23°C selon ASTM D 256.

10. Objet comprenant la composition selon l'une quelconque des revendications 1 à 8.
